# EUROPÄISCHE PATENTANMELDUNG

(11) **EP 1 521 180 A1**
(43) Veröffentlichungstag der Anmeldung: **06.04.2005**
(21) Anmeldenummer: 03022034.7
(22) Anmeldetag: 01.10.2003
(51) Int. Cl.: G06F 15/02

(54) **Elektronisches Buch System**

(71) Anmelder: Kostadinov, Boris Raychev, 8000 Burgas (BG)
(72) Erfinder: Kostadinov, Boris Raychev, 8000 Burgas (BG)

(57) **Zusammenfassung**

Ein neuer tragbarer Computer, der von einem speziell entwickelten Operationsprogramm gesteuert wird. Seine Funktionen sind darauf beschränkt sowohl einer Privatbibliothek zu dienen als auch das Lesen und Enthalten von zahlreichen elektronischen Büchern zu sichern.

Die vereinfachten Funktionen von dieser neuen Computerart, auch "Digital-Bibliothek" genannt, erlauben die Beseitigung von vielen zusätzlichen Einrichtungen (wie z. B. Klaviatur, Maus...), die für einen normalen tragbaren Computer unbedingt notwendig wären. Das verringert die Größe, das Gewicht und den Energieverbrauch der Digital-Bibliothek. Ihre Größe und Gewicht entsprechen einem mittleren Buch, was sie handlich macht. Man hält sie bequem in der Hand, im Handgepäck oder in der Damentasche. Der niedrige Energieverbrauch dieses Computers gewährt eine sehr lange Anwendung im Freien und ohne elektrischen Strom. Ein Adapter gehört zum Zubehör und ermöglicht eine unbegrenzte Benutzung der Digital-Bibliothek beim Anschluss im Netz.

Die Produktion der elektronischen Bücher als einfaches Integralschema macht sie billiger und sehr lange erhalten. Ihre Minigröße ermöglicht uns hunderte von Büchern in einer einzigen Digital-Bibliothek aufzubewahren.

## Beschreibung

Die Erfindung stellt einen neuen tragbaren Computer dar, der von einem speziell entwickelten Operationsprogramm gesteuert wird. Seine Funktionen sind darauf beschränkt sowohl als eine Privatbibliothek zu dienen als auch das Lesen und Erhalten von zahlreichen elektronischen Büchern zu sichern.

Das elektronische Buch existiert bereits als Produkt auf dem Markt und seine Nutzung ist breit verbreitet, wie z. B. die so genannte .pdf Datei. Das Problem dieser Bücher ist, dass ihre Nutzung sehr oft unbequem ist, weil sie immer von einem Computer abhängen. Der Computer zu Hause ist nicht für langes Lesen geeignet, außerdem kann er nur zu Hause benutzt werden. Obwohl das Letzte nicht für die so genannten Laptops gilt, bleiben sie immer noch nicht bequem für dieses Ziel, wegen ihrer Form und des schnelleren Ausleerens der Batterie.

Auf der anderen Seite haben wir die bequemen Papierbücher, die überall getragen werden können und für ihre Nutzung nicht von der Elektrizität abhängen. Ihre Nachteile sind aber, dass das Papier schneller altert und beschädigt wird. Sie können bei knappem Licht nicht gelesen werden, und obwohl ein Buch leicht zu tragen ist, zwei oder mehr sind schon eine unbequeme und schwere Last. Es ist wichtig hinzuzufügen, dass das Papier immer teurer und wertvoller wird, und das steigert ständig den Preis von Papierwaren.

Das Ziel der Erfindung ist die Vorteile der oben genannten Waren zu vereinigen und ihre Nachteile zu beseitigen und damit maximalen Komfort und leichte Benutzung für den Verbraucher zu schaffen. Die vereinfachten Funktionen von diesem neuen Computerart, von jetzt an "Digital-Bibliothek" genannt, erlauben die Beseitigung von vielen zusätzlichen Einrichtungen (wie z. B. Klaviatur, Maus...), die für einen normalen tragbaren Computer unbedingt notwendig wären. Das verringert die Größe, das Gewicht und den Verbrauch von Energie der Digital-Bibliothek. Ihre Größe und Gewicht entsprechen einem mittleren Buch und das macht sie handlich; man hält sie bequem in der Hand, im Handgepäck oder in der Damentasche. Der niedrige Energieverbrauch dieses Computers erlaubt eine sehr lange Anwendung im Freien, ohne elektrischen Strom. Ein Adapter gehört zum Zubehör und erlaubt unbegrenzte Benutzung der Digital-Bibliothek beim Anschluss im Netz. Das speziell entwickelte Operationsprogramm ist autonom, lässt sich von dem Verbraucher nicht ändern (d.h. erneute Installation, wie jede Änderungen am originellen Operationsprogramm, sind dem Verbraucher nicht erlaubt) und eine Wechselwirkung mit anderen Geräten, außer mit den elektronischen Büchern, ist unzulässig. Die elektronischen Bücher selbst sind Dateien mit Information, die auf einen tragbaren speichernden Mikrochip gespeichert ist. Diese Information kann nicht geändert oder kopiert werden und kann nur von der Digital-Bibliothek gelesen werden. Das macht die elektronischen Bücher vom Computer unabhängig und bei Beschädigung der Digital-Bibliothek, bleiben sie selbst unbeschädigt. Die Produktion als einfaches Integralschema macht die elektronischen Bücher billiger und auf lange Zeit erhalten. Ihre Minigröße erlaubt uns hunderte von Büchern in einer einzigen Digital-Bibliothek aufzubewahren.

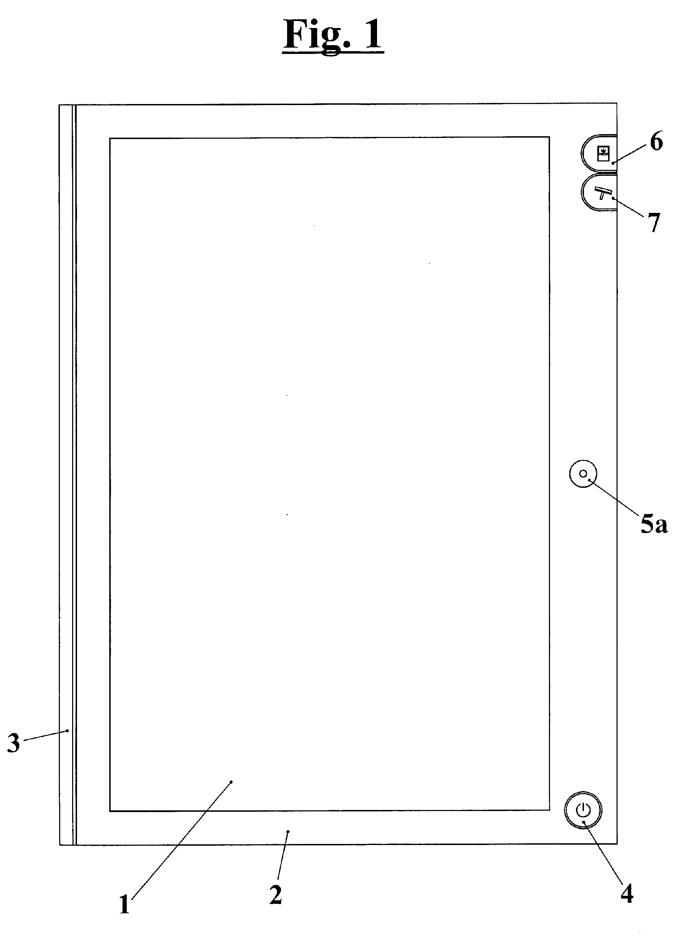

Es folgt ausführliche Beschreibung der Erfindung anhand eines Beispiels und mit Bezug auf die beiliegenden Zeichnungen, wobei
*Abbildung 1* Blick von vorne der Digital-Bibliothek in Maßstab 1:1 darstellt, wobei der Deckel (3) zu der hinteren Seite des Computers zusammengefaltet ist,

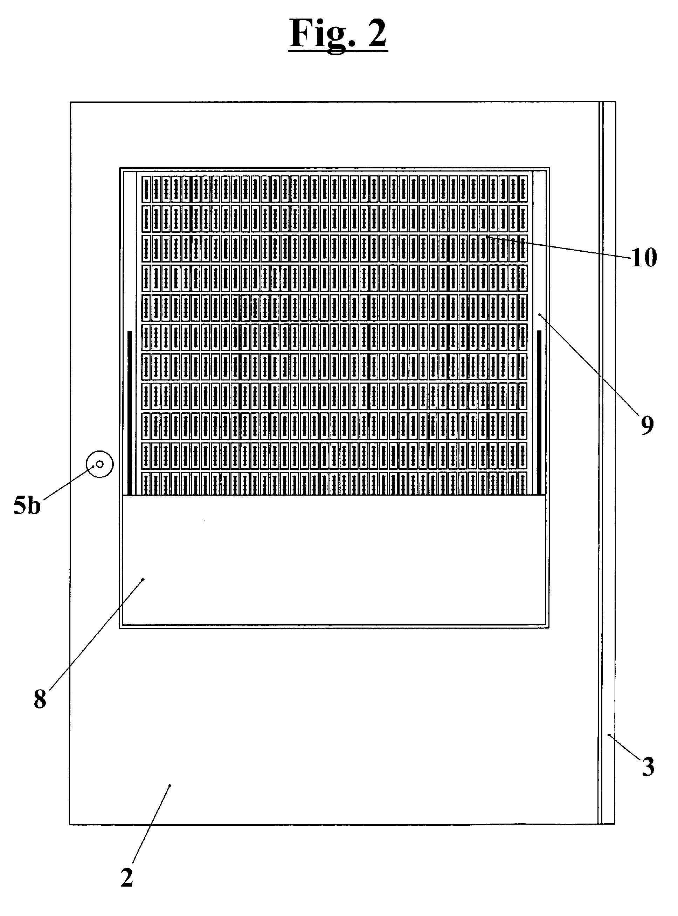

*Abbildung 2* Blick von hinten der Digital-Bibliothek in Maßstab 1:1 darstellt, wobei der Deckel (3) zu der vorderen Seite des Computers zusammengefaltet ist,

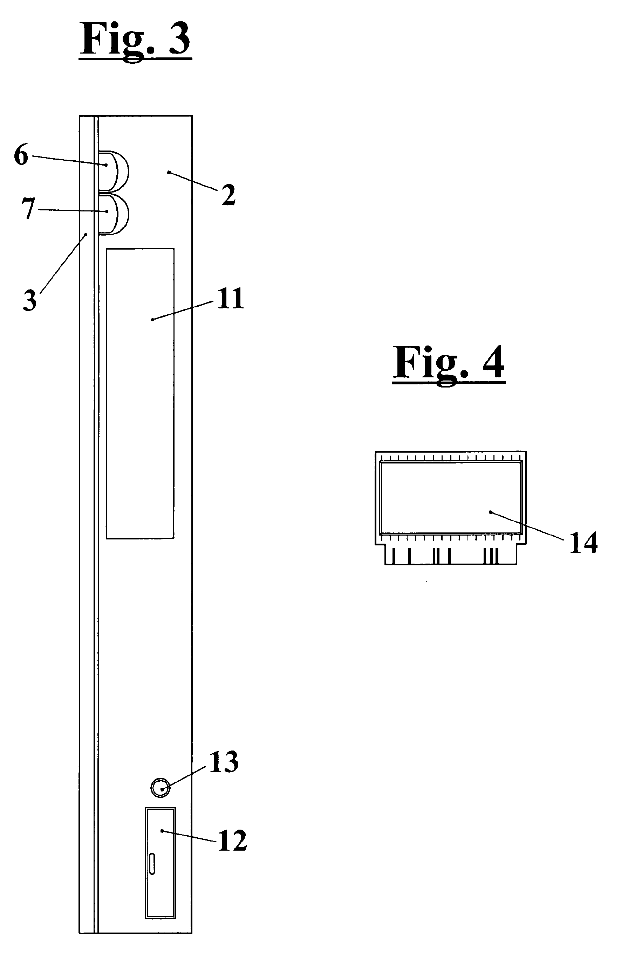

*Abbildung 3* Blick von rechts der Digital-Bibliothek in Maßstab 1:1 darstellt, wobei der Deckel (3) zu der hinteren Seite des Computers zusammengefaltet ist,
*Abbildung 4* schematisch des Aussehen eines elektronischen Buches in Maßstab 2:1 darstellt, und

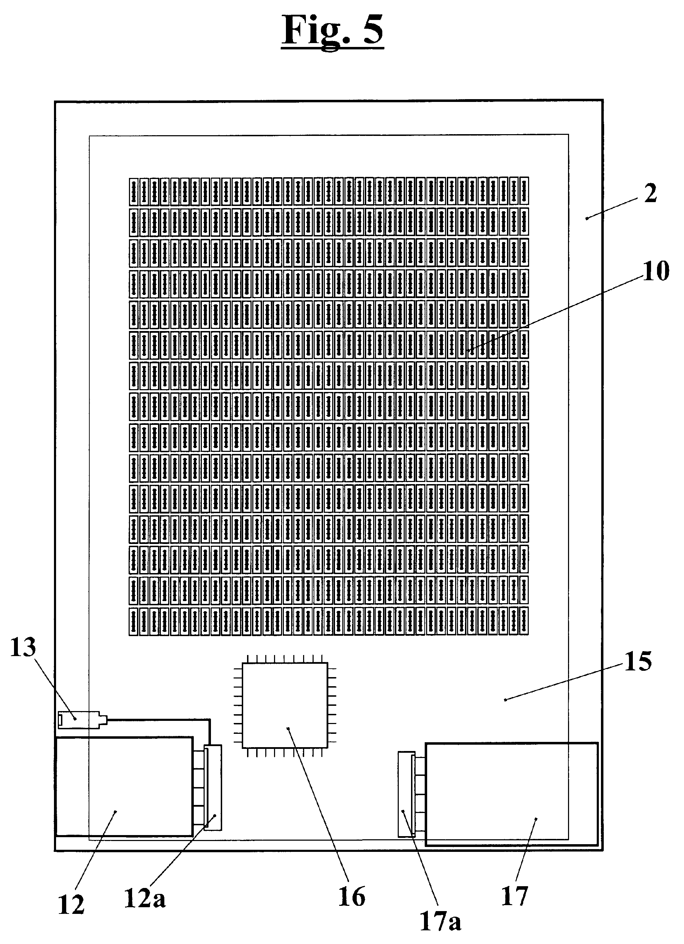

Abbildung 5 schematisch das Aussehen des Hauptintegralschemas und der anderen eingebauten Einrichtungen des Computers in Maßstab 1:1 darstellt.

Mit dem Liquid Crystal Display (1) wird die Digital-Bibliothek gesteuert. Die Befehle werden durch leichtes Drücken des Zeigefingers auf die passende Stelle am Bildschirm (1) gegeben. Die einzigen mechanischen Druckknöpfe sind der Knopf zum Einschalten/Ausschalten (4), der Knopf zum Öffnen des Nestes (6) und der Knopf zum Öffnen von dem Deckel des Reinigers (7).

Das Fach für die elektronischen Bücher (9) befindet sich auf dem Rücken der Digital-Bibliothek und sein Deckel (8) kann nur mit dem oben genannten Knopf (6) geöffnet werden, wobei der Deckel (8) in den Kasten (2) einschiebt. Das Fach (9) ist die eigentliche Bibliothek des Computers und enthält die Slots für die elektronischen Bücher (10). Die Berechnungen geben an, dass das Fach (9) bis zu 500 elektronischen Büchern (14) enthalten könnte. Jedes Slot (10) in dem Fach (9) entspricht einem genau bestimmten Platz in dem Operationsprogramm, d. h. einem bestimmten Fach der dreidimensionalen Bibliothek, die auf dem Bildschirm (1) dargestellt ist. Das erlaubt dem Verbraucher seine elektronischen Bücher (14) selbst zu ordnen.

Der Deckel (3) schützt den Bildschirm (1), wenn die Digital-Bibliothek nicht in Betrieb ist. Er besitzt Scharniere, die den Deckel (3) ermöglichen, einen Umkreis von fast 360 Grad zu machen, damit er zu dem Rücken des Computers während des Betriebes, zusammengefaltet werden kann. Die Magnete (5a) und (5b) dienen als Verschlüsse.

Der Reiniger für den Bildschirm befindet sich im Fach (11) auf der rechten Seite des Computers. Es kann nur mit dem oben genannten Knopf (7) geöffnet werden.

Das Hauptintegralschema (15) des Computers, auf dem sich der Prozessor (16) befindet, funktioniert gleichzeitig als Mainboard, Grafikkarte und Hauptspeicher, und besitzt die Slots für die elektronischen Bücher (10). Es befindet sich im Kasten (2) der Digital-Bibliothek. Unten rechts sind die Batterie (12) und die Buchse des elektrischen Adapters (13) eingebettet. Zur Erhaltung des Operationsprogramms ist ein speichernder Mikrochip (17) vorgesehen.

Die Batterie (12) ist die Hauptenergiequelle der Digital-Bibliothek. Sie kann von einem elektrischen Adapter nachgeladen werden. Die Batterie (12) kann sehr leicht von dem Verbraucher gewechselt werden, wenn sie beschädigt oder leer wird.

Die elektronischen Bücher (14) sind Dateien mit Information, die auf einen tragbaren speichernden Mikrochip gespeichert ist. Sie können an die Slots (10) angeschlossen werden, wenn die Digital-Bibliothek ausgeschaltet ist. Wird die Digital-Bibliothek eingeschaltet, so werden alle eingeführten Bücher in den Speicher geladen und damit zum Lesen bereit.

## Patentansprüche

1. Ein neuer tragbarer Computer (oben "Digital-Bibliothek" genannt), der von einem speziell entwickelten Operationsprogramm gesteuert wird, wobei seine Funktionen darauf beschränkt sind als Privatbibliothek zu dienen und das Lesen und Erhalten von zahlreichen elektronischen Büchern zu sichern,
**dadurch gekennzeichnet,**
**dass** er mit dem Liquid Crystal Display (1) gesteuert wird. Der Druckknopf (4) dient zum Einschalten/Ausschalten. Alle anderen Befehle werden durch leichtes Drücken des Zeigefingers auf die passende Stelle am Bildschirm (1) gegeben.

2. Ein tragbarer Computer gemäß Anspruch 1,
**dadurch gekennzeichnet,**
**dass** das Fach für die elektronischen Bücher (9) sich auf dem Rücken der Digital-Bibliothek befindet und sein Deckel (8) nur mit dem oben genannten Knopf (6) geöffnet werden kann, wobei der Deckel (8) in den Kasten (2) einschiebt. Das Fach (9) ist die eigentliche Bibliothek des Computers und enthält die Slots für die elektronischen Bücher (10).

3. Ein tragbarer Computer gemäß Anspruch 2,
**dadurch gekennzeichnet,**
**dass** die Slots für die elektronischen Bücher (10), die Teil des Hauptintegralschemas (15) sind, zum Anschluss der elektronischen Bücher (14) an die Digital-Bibliothek dienen.

4. Ein tragbarer Computer gemäß Anspruch 3,
**dadurch gekennzeichnet,**
**dass** das Hauptintegralschema (15) der Digital-Bibliotheken, auf dem sich der Prozessor (16) befindet, gleichzeitig als Mainboard, Grafikkarte und Hauptspeicher funktioniert und die Slots für die elektronischen Bücher (10) besitzt.

5. Ein tragbarer Computer gemäß Anspruch 4,
**dadurch gekennzeichnet,**
**dass** der Deckel (3), der den Bildschirm (1) schützt, wenn die Digital-Bibliothek nicht in Betrieb ist, Scharniere besitzt, die den Deckel (3) ermöglichen, einen Umkreis von fast 360 Grad zu machen, damit er zu dem Rücken des Computers, während des Betriebes, zusammengefaltet werden kann, wobei die Magnete (5a) und (5b) als Verschlüsse dienen.

6. Ein tragbarer Computer gemäß Anspruch 5,
**dadurch gekennzeichnet,**
**dass** das Fach (11), das sich auf der rechten Seite des Computers befindet, für den Reiniger des Bildschirms vorgesehen ist. Es kann nur mit dem oben genannten Knopf (7) geöffnet werden.

7. Ein tragbarer Computer gemäß Anspruch 6,
**dadurch gekennzeichnet,**
**dass** die Digital-Bibliothek mit speziell entwickeltem Operationsprogramm gesteuert wird, das auf dem speichernden Mikrochip (17) gespeichert ist, sich von dem Verbraucher nicht ändern lässt (d.h. eine erneute Installation, sowohl auch irgendwelche Änderungen des originellen Operationsprogramms, sind dem Verbraucher nicht erlaubt) und keine Wechselwirkung mit anderen Geräten, außer mit den elektronischen Büchern (14), zulässt.

8. Elektronische Bücher (14),
**dadurch gekennzeichnet,**
**dass** sie Dateien mit Information, die auf einen tragbaren speichernden Mikrochip gespeichert ist, darstellen. Sie können an die Slots (10) der Digital-Bibliothek angeschlossen werden.

9. Elektronische Bücher (14) gemäß Anspruch 8,
**dadurch gekennzeichnet,**
**dass** sie zu den Slots (10) der Digital-Bibliothek angeschlossen und aufbewahrt werden müssen, um benutzt werden zu können.
